# EUROPEAN PATENT APPLICATION

(11) **EP 4 746 056 A1**
(43) Date of publication of application: **20.05.2026**
(21) Application number: 25215365.5
(22) Date of filing: 12.11.2025
(51) Int. Cl.: H01M 4/04, H01M 4/133, H01M 4/134, H01M 4/139

(54) **NEGATIVE ELECTRODE FOR LITHIUM SECONDARY BATTERY AND METHOD FOR MANUFACTURING THE SAME**

(30) Priority: 18.11.2024 KR 20240164302; 10.11.2025 KR 20250168444
(71) Applicant: SK On Co., Ltd., Seoul 03161 (KR)
(72) Inventor: JO, Yeong Min, Daejeon 34124 (KR); BAE, Mi Ju, Daejeon 34124 (KR); KIM, In Ha, Daejeon 34124 (KR); SHIN, In Yong, Daejeon 34124 (KR); LEE, Se Mi, Daejeon 34124 (KR); JEON, Chi Won, Daejeon 34124 (KR); JIN, Bo Gyeong, Daejeon 34124 (KR)
(74) Representative: Prüfer & Partner mbB Patentanwälte · Rechtsanwälte

(57) **Abstract**

The present disclosure relates to a negative electrode for a lithium secondary battery and a method of manufacturing the same. Such a negative electrode for a lithium secondary battery and a method of manufacturing the same are configured such that a surface energy of a surface of the negative electrode for the lithium secondary battery included in the lithium secondary battery is 52 mN/m or more and 68 mN/m or less.

## Description

### BACKGROUND OF THE INVENTION

### 1. Field

The present disclosure relates to a negative electrode for a lithium secondary battery and a method of manufacturing the same, and more particularly, to a negative electrode for a lithium secondary battery and a method of manufacturing the same capable of improving a charging speed of the lithium secondary battery.

### 2. Description of the Related Art

A battery is a device that converts chemical energy generated during an electrochemical redox reaction of a chemical substance contained therein into electrical energy, and is classified into a primary battery, which must be discarded when all energy inside the battery is consumed, and a secondary battery, which can be charged and used multiple times.

Recently, with the development of the advanced electronic industry, miniaturization and weight reduction of electronic devices have become possible, thereby increasing the use of portable electronic devices, and research on lithium secondary batteries having high energy density as a power source for such portable electronic devices has been actively conducted.

In order to more efficiently use lithium secondary batteries having such high energy density, it is necessary to charge the lithium secondary battery at a high speed.

Meanwhile, the lithium secondary battery includes a positive electrode and a negative electrode, and the negative electrode for the lithium secondary battery may be manufactured by preparing a slurry by mixing a negative electrode active material, a binder, and a conductive material, coating the prepared slurry on a negative electrode current collector, and then drying and rolling the same. When the speed at which the electrolyte is impregnated into such a negative electrode for the lithium secondary battery increases, the charging speed of the lithium secondary battery increases.

Therefore, it is necessary to develop a negative electrode for a lithium secondary battery and a method of manufacturing the same, which can improve the charging speed of the lithium secondary battery by enhancing the speed at which the electrolyte is impregnated.

### SUMMARY OF THE INVENTION

An object of the present disclosure is to provide a negative electrode for a lithium secondary battery in which a speed at which an electrolyte is impregnated is improved.

Another object of the present disclosure is to provide a method of manufacturing a negative electrode for a lithium secondary battery in which a speed at which an electrolyte is impregnated is improved.

The negative electrode for a lithium secondary battery and the method of manufacturing the same according to the present disclosure can be widely used in the green technology field utilizing batteries such as electric vehicles. In addition, a battery assembly manufactured through the negative electrode for a lithium secondary battery and the method of manufacturing the same according to the present disclosure can be used in eco-friendly electric vehicles and hybrid vehicles to prevent climate change by suppressing air pollution and greenhouse gas emissions.

As a technical means for solving the above-described technical problems, a negative electrode for a lithium secondary battery according to one embodiment of the present disclosure is a negative electrode for a lithium secondary battery included in the lithium secondary battery, wherein a surface of the negative electrode for the lithium secondary battery may have a surface energy of 52 mN/m or more and 68 mN/m or less.

In addition, the surface of the negative electrode for the lithium secondary battery may have a water contact angle of 40° or more and 74° or less.

In addition, the negative electrode for the lithium secondary battery may include a negative electrode current collector and a negative electrode active material layer formed by applying a negative electrode active material to the negative electrode current collector.

In addition, the surface of the negative electrode for the lithium secondary battery may be a surface of the negative electrode active material layer.

In addition, a surface of the negative electrode active material layer may be irradiated with an electron beam such that the surface energy becomes 52 mN/m or more and 68 mN/m or less and the water contact angle becomes 40° or more and 74° or less.

In addition, the negative electrode active material layer may further include a binder and a conductive material.

In addition, when the electron beam is irradiated, the binder may be decomposed such that at least one of a surface energy and a water contact angle of the surface of the negative electrode active material layer changes.

As a technical means for solving the above-described technical problems, a method of manufacturing a negative electrode for a lithium secondary battery according to one embodiment of the present disclosure may include a preparation step of preparing a negative electrode current collector, a coating step of forming a negative electrode active material layer by applying a negative electrode active material to the negative electrode current collector, and an irradiation step of irradiating the negative electrode active material layer with an electron beam.

In addition, a surface of the negative electrode active material layer may have a surface energy of 52 mN/m or more and 68 mN/m or less.

In addition, a surface of the negative electrode active material layer may have a water contact angle of 40° or more and 74° or less.

In addition, the negative electrode active material layer may further include a binder and a conductive material.

In addition, when the electron beam is irradiated, the binder may be decomposed such that a surface energy and a water contact angle of the surface of the negative electrode active material layer may change.

Specific details of other embodiments for solving the problems are included in the description of the invention and the drawings.

According to the means for solving the problems of the present disclosure as described above, the negative electrode for a lithium secondary battery according to the present disclosure provides an effect in that a speed at which an electrolyte is impregnated is improved, so that a lithium secondary battery including the negative electrode for a lithium secondary battery can be rapidly charged.

In addition, the method of manufacturing a negative electrode for a lithium secondary battery according to the present disclosure provides an effect in that a negative electrode for a lithium secondary battery, in which a speed at which an electrolyte is impregnated is improved so that the lithium secondary battery can be rapidly charged, can be manufactured.

### BRIEF DESCRIPTION OF THE DRAWINGS

FIG. 1 is a diagram illustrating a negative electrode for a lithium secondary battery according to one embodiment of the present disclosure.
FIG. 2 is a flowchart illustrating a method of manufacturing a negative electrode for a lithium secondary battery according to one embodiment of the present disclosure.
FIG. 3 is a diagram illustrating a water contact angle of a negative electrode active material layer according to Comparative Example 1.
FIG. 4 is a diagram illustrating a water contact angle of a negative electrode active material layer according to Example 1.
FIG. 5 is a diagram illustrating a length of electrolyte impregnated into the negative electrode active material layer per unit time according to Comparative Example and Example.
FIG. 6 is a graph illustrating a relationship between a surface energy of the negative electrode active material layer and a speed at which an electrolyte is impregnated into the negative electrode for a lithium secondary battery.
FIG. 7 is a graph illustrating a relationship between a water contact angle of the negative electrode active material layer having a surface energy of 52 mN/m or more and 68 mN/m or less and a speed at which an electrolyte is impregnated into the negative electrode for a lithium secondary battery.

### DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

Throughout the specification, when it is mentioned that a part is "connected" to another part, it includes not only the case where they are "directly connected," but also the case where they are "electrically connected" with another element in between.

Throughout the specification, when it is mentioned that an element is "on" another element, this includes not only the case where the element is in contact with the other element, but also the case where there is another element between the two elements.

Throughout the specification, when it is mentioned that a part "includes" or "comprises" a component, this does not mean that it excludes other components, but rather that it may include other components, unless otherwise specifically stated. The terms such as "about" and "substantially", which indicate degrees, as used throughout the specification, are used in a meaning that is at or near a numerical value when manufacturing and material tolerances inherent in the meanings stated are given, and are used to prevent unscrupulous infringers from unfairly exploiting the disclosure, which states precise or absolute numbers to aid understanding of the present disclosure. The terms "step of doing ~" or "step of ~" as used throughout the specification do not mean "step for ~".

Hereinafter, with reference to the accompanying drawings and the description below, preferred embodiments of the present disclosure are described in detail. However, the present disclosure is not limited to the embodiments described here, but may be embodied in other forms. Throughout the specification, the same reference numerals represent the same components.

Hereinafter, a negative electrode for a lithium secondary battery according to one embodiment of the present disclosure will be described.

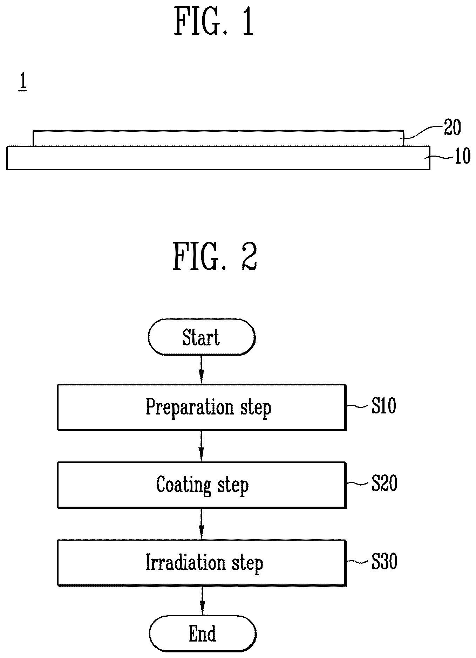

FIG. 1 is a diagram illustrating a negative electrode for a lithium secondary battery according to one embodiment of the present disclosure.

Referring to FIG. 1, a negative electrode 1 for a lithium secondary battery is included in the lithium secondary battery and comprises a negative electrode current collector 10 and a negative electrode active material layer 20.

First, the negative electrode current collector 10 will be described.

The negative electrode current collector 10 may be formed of copper foil, nickel foil, stainless steel foil, titanium foil, nickel foam, copper foam, a polymer substrate coated with a conductive metal, or a combination thereof, but the configuration of the negative electrode current collector 10 is not limited thereto.

Next, the negative electrode active material layer 20 will be described.

The negative electrode active material layer 20 may be formed by applying a negative electrode active material to the negative electrode current collector 10.

As the negative electrode active material, a material capable of reversibly intercalating/deintercalating lithium ions, lithium metal, an alloy of lithium metal, a material capable of doping and dedoping lithium, or a material including a transition metal oxide may be used.

As the material capable of intercalating/deintercalating lithium ions, a carbon material may be used, and all carbon-based negative electrode active materials generally used in lithium ion secondary batteries may be employed. For example, crystalline carbon, amorphous carbon, or a combination thereof may be used. Examples of crystalline carbon include graphite such as natural graphite or artificial graphite having an amorphous, plate-shaped, flake-shaped, spherical, or fibrous form, and examples of amorphous carbon include soft carbon (low-temperature calcined carbon), hard carbon, mesophase pitch carbonized material, and calcined coke.

As the alloy of lithium metal, an alloy of lithium with Na, K, Rb, Cs, Fr, Be, Mg, Ca, Sr, Si, Sb, Pb, In, Zn, Ba, Ra, Ge, Al, or Sn may be used.

As the material capable of doping and dedoping lithium, Si, SiOx (0 < x < 2), a Si-C composite, a Si-Q alloy (wherein Q is an alkali metal, an alkaline earth metal, a Group 13 to Group 16 element, a transition metal, a rare earth element, or a combination thereof, and not Si), Sn,

SnO₂, a Sn-C composite, a Sn-R alloy (wherein R is an alkali metal, an alkaline earth metal, a Group 13 to Group 16 element, a transition metal, a rare earth element, or a combination thereof, and not Sn), and the like may be mentioned, and a material obtained by mixing at least one of these with SiO₂ may also be used.

Examples of transition metal oxides include vanadium oxide and lithium vanadium oxide.

Meanwhile, the negative electrode active material layer 20 may further include a binder and a conductive material.

The binder serves to firmly attach negative electrode active material particles to each other and also to firmly attach the negative electrode active material to the current collector. Representative examples thereof include polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon. However, the composition of the binder is not limited thereto.

The conductive material is used to impart conductivity to the electrode, and may be any electron-conductive material that does not cause a chemical change in the constructed battery. For example, the conductive material may include carbon-based materials such as natural graphite, artificial graphite, carbon black, acetylene black, ketjen black, and carbon fibers; metal-based materials such as metal powders or metal fibers of copper, nickel, aluminum, or silver; conductive polymers such as polyphenylene derivatives; or a mixture thereof.

The surface of the negative electrode 1 for a lithium secondary battery including the negative electrode current collector 10 and the negative electrode active material layer 20 as described above may have a surface energy of 52 mN/m or more and 68 mN/m or less.

In addition, the surface of the negative electrode 1 for a lithium secondary battery may have a contact angle (hereinafter referred to as a water contact angle) between the surface of the negative electrode 1 and a water droplet 30 located on the surface of the negative electrode 1 of 40° or more and 74° or less.

Specifically, the surface of the negative electrode 1 for a lithium secondary battery may be a surface of the negative electrode active material layer 20, and the negative electrode 1 for a lithium secondary battery may have a surface energy of the surface of the negative electrode active material layer 20 of 52 mN/m or more and 68 mN/m or less and a water contact angle of 40° or more and 74° or less.

Meanwhile, the surface of the negative electrode active material layer 20 may be modified to have a surface energy of 52 mN/m or more and 68 mN/m or less and a water contact angle of 40° or more and 74° or less.

For example, an electron beam may be irradiated onto the negative electrode active material layer 20 so that the surface of the negative electrode active material layer 20 is modified to have a surface energy of 52 mN/m or more and 68 mN/m or less and a water contact angle of 40° or more and 74° or less.

That is, when the electron beam is irradiated onto the negative electrode active material layer 20, the binder is decomposed so that at least one of a surface energy and a water contact angle of the surface of the negative electrode active material layer 20 changes, and the surface of the negative electrode active material layer 20 may have a surface energy of 52 mN/m or more and 68 mN/m or less and a water contact angle of 40° or more and 74° or less.

As described above, the surface of the negative electrode active material layer 20 may be modified by irradiating an electron beam, but the method of modifying the surface of the negative electrode active material layer 20 is not limited thereto. For example, the surface of the negative electrode active material layer 20 may be modified by corona discharge treatment, plasma treatment, or ion plating on the surface of the negative electrode active material layer 20.

The surface energy may be obtained by dropping a liquid droplet onto the surface of the negative electrode active material layer 20 and using the contact angle of the droplet on the surface of the negative electrode active material layer 20. The surface energy may be obtained by recording a video of the droplet provided on the surface of the negative electrode active material layer 20 and analyzing it using the OWRK (Owens-Wendt-Rabel & Kaelble) model.

Specifically, the droplet may include a polar liquid and a nonpolar liquid. The surface energy may be obtained by measuring the contact angle on the negative electrode active material layer 20 using droplets of the respective polar liquid and nonpolar liquid. By using the OWRK (Owens-Wendt-Rabel & Kaelble) model, a hydrophilic surface energy and a hydrophobic surface energy of the surface of the negative electrode active material layer 20 for each of the polar liquid and the nonpolar liquid may be obtained, and the surface energy of the negative electrode active material layer 20 may be obtained therefrom.

For example, the polar liquid may include water, and the nonpolar liquid may include methylene iodide. The droplet may respectively use 1 µL of water and 1 µL of methylene iodide.

In the case where the droplet uses water, the contact angle may be measured by fitting the contour of the droplet into an ellipse and calculated by a tangent method (Ellipse (Tangent-1) method). In addition, in the case where the droplet is methylene iodide, the contact angle may be measured by simply fitting the contour of the droplet while assuming it as a circle (Circle method).

In the present disclosure, the contact angle may be measured ten times at intervals of 1 second for each droplet, and the average value thereof may be represented as the surface energy of the surface of the negative electrode active material layer 20.

The water contact angle may be obtained by dropping water as a droplet onto the surface of the negative electrode active material layer 20 to form a solid-liquid-gas three-phase boundary line. The water contact angle may be measured by fitting the contour of the droplet on the surface of the negative electrode active material layer 20 into an ellipse and calculated by a tangent method (Ellipse (Tangent-1) method).

In the present disclosure, the water contact angle may be measured ten times at intervals of 1 second using water as the droplet, and the average value thereof may be represented as the water contact angle of the surface of the negative electrode active material layer 20.

Hereinafter, a method of manufacturing a negative electrode for a lithium secondary battery according to one embodiment of the present disclosure will be described.

FIG. 2 is a flowchart illustrating a method of manufacturing a negative electrode for a lithium secondary battery according to one embodiment of the present disclosure.

Referring to FIG. 2, a method of manufacturing a negative electrode for a lithium secondary battery includes a preparation step S10, a coating step S20, and an irradiation step S30, and the negative electrode for a lithium secondary battery manufactured by the method of manufacturing a negative electrode for a lithium secondary battery may be the same as the negative electrode 1 for a lithium secondary battery described above.

First, the preparation step S10 will be described.

The preparation step S10 is a step of preparing a negative electrode current collector 10.

The negative electrode current collector 10 may be formed of copper foil, nickel foil, stainless steel foil, titanium foil, nickel foam, copper foam, a polymer substrate coated with a conductive metal, or a combination thereof, but the configuration of the negative electrode current collector 10 is not limited thereto.

Next, the coating step S20 will be described.

The coating step S20 is a step of forming a negative electrode active material layer 20 by applying a negative electrode active material to the negative electrode current collector 10.

As the negative electrode active material, a material capable of reversibly intercalating/deintercalating lithium ions, lithium metal, an alloy of lithium metal, a material capable of doping and dedoping lithium, or a material including a transition metal oxide may be used.

As the material capable of intercalating/deintercalating lithium ions, a carbon material may be used, and all carbon-based negative electrode active materials generally used in lithium ion secondary batteries may be employed. For example, crystalline carbon, amorphous carbon, or a combination thereof may be used. Examples of crystalline carbon include graphite such as natural graphite or artificial graphite having an amorphous, plate-shaped, flake-shaped, spherical, or fibrous form, and examples of amorphous carbon include soft carbon (low-temperature calcined carbon), hard carbon, mesophase pitch carbonized material, and calcined coke.

As the alloy of lithium metal, an alloy of lithium with Na, K, Rb, Cs, Fr, Be, Mg, Ca, Sr, Si, Sb, Pb, In, Zn, Ba, Ra, Ge, Al, or Sn may be used.

As the material capable of doping and dedoping lithium, Si, SiOx (0 < x < 2), a Si-C composite, a Si-Q alloy (wherein Q is an alkali metal, an alkaline earth metal, a Group 13 to Group 16 element, a transition metal, a rare earth element, or a combination thereof, and not Si), Sn, SnO₂, a Sn-C composite, a Sn-R alloy (wherein R is an alkali metal, an alkaline earth metal, a Group 13 to Group 16 element, a transition metal, a rare earth element, or a combination thereof, and not Sn), and the like may be mentioned, and a material obtained by mixing at least one of these with SiO₂ may also be used.

Examples of transition metal oxides include vanadium oxide and lithium vanadium oxide.

Meanwhile, the negative electrode active material layer 20 may further include a binder and a conductive material.

For example, a slurry may be prepared by mixing the above-described negative electrode active material with a binder and a conductive material, and the prepared slurry may be coated on the negative electrode current collector to form the negative electrode active material layer 20.

The binder serves to firmly attach the negative electrode active material particles to each other and also to firmly attach the negative electrode active material to the current collector. Representative examples thereof include polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon. However, the composition of the binder is not limited thereto.

The conductive material is used to impart conductivity to the electrode, and may be any electron-conductive material that does not cause a chemical change in the constructed battery. For example, the conductive material may include carbon-based materials such as natural graphite, artificial graphite, carbon black, acetylene black, Ketjen black, and carbon fibers; metal-based materials such as metal powders or metal fibers of copper, nickel, aluminum, or silver; conductive polymers such as polyphenylene derivatives; or a mixture thereof.

Next, the irradiation step S30 will be described.

The irradiation step S30 is a step of irradiating the negative electrode active material layer 20 with an electron beam.

By irradiating the negative electrode active material layer 20 with the electron beam, the surface of the negative electrode 1 for a lithium secondary battery may have a surface energy of 52 mN/m or more and 68 mN/m or less. In addition, the surface of the negative electrode 1 for a lithium secondary battery may have a water contact angle of 40° or more and 74° or less.

Specifically, the surface of the negative electrode 1 for a lithium secondary battery may be a surface of the negative electrode active material layer 20, and the negative electrode 1 for a lithium secondary battery may have a surface energy of the surface of the negative electrode active material layer 20 of 52 mN/m or more and 68 mN/m or less by irradiating the negative electrode active material layer 20 with the electron beam. In addition, the negative electrode 1 for a lithium secondary battery may have a water contact angle of the surface of the negative electrode active material layer 20 of 40° or more and 74° or less by irradiating the negative electrode active material layer 20 with the electron beam.

That is, when the negative electrode active material layer 20 is irradiated with an electron beam, the binder is decomposed so that at least one of a surface energy and a water contact angle of the surface of the negative electrode active material layer 20 changes, and the surface of the negative electrode active material layer 20 may have a surface energy of 52 mN/m or more and 68 mN/m or less and a water contact angle of 40° or more and 74° or less.

Meanwhile, in the irradiation step S30, the surface of the negative electrode active material layer 20 may be modified by irradiating the surface of the negative electrode active material layer 20 with an electron beam, but the method of modifying the surface of the negative electrode active material layer 20 is not limited thereto. For example, the surface of the negative electrode active material layer 20 may also be modified by corona discharge treatment, plasma treatment, or ion plating on the surface of the negative electrode active material layer 20.

Hereinafter, examples and comparative examples of the present disclosure will be described. However, the following embodiments are merely one embodiment of the present disclosure, and the present disclosure is not limited to the following embodiments.

### [Preparation of Examples and comparative examples]

### Example 1: Manufacture of the negative electrode 1 for a lithium secondary battery

A material having a weight ratio of 70% artificial graphite, 26% natural graphite, 0% SiOx, 0.5% conductive material, 1.5% CMC, and 2.0% SBR was mixed, and then applied to the negative electrode current collector 10 to form a negative electrode active material layer 20. An electron beam of 0.5 MeV/200 kGy was irradiated onto the negative electrode active material layer 20.

### Comparative Example 1: Manufacture of the negative electrode 1 for a lithium secondary battery

A material having a weight ratio of 70% artificial graphite, 26% natural graphite, 0% SiOx, 0.5% conductive material, 1.5% CMC, and 2.0% SBR was mixed, and then applied to the negative electrode current collector 10 to form a negative electrode active material layer 20.

In Comparative Example 1, the material applied to the negative electrode current collector 10 was the same as in Example 1, but in Comparative Example 1, the negative electrode active material layer 20 was not irradiated with an electron beam.

### Example 2: Manufacture of the negative electrode 1 for a lithium secondary battery

A material having a weight ratio of 70% artificial graphite, 25% natural graphite, 1% SiOx, 0.5% conductive material, 1.5% CMC, and 2.0% SBR was mixed, and then applied to the negative electrode current collector 10 to form a negative electrode active material layer. An electron beam of 0.5 MeV/200 kGy was irradiated onto the negative electrode active material layer 20.

### Comparative Example 2: Manufacture of the negative electrode 1 for a lithium secondary battery

A material having a weight ratio of 70% artificial graphite, 25% natural graphite, 1% SiOx, 0.5% conductive material, 1.5% CMC, and 2.0% SBR was mixed, and then applied to the negative electrode current collector 10 to form a negative electrode active material layer.

In Comparative Example 2, the material applied to the negative electrode current collector 10 was the same as in Example 2, but in Comparative Example 2, the negative electrode active material layer 20 was not irradiated with an electron beam.

### Example 3: Manufacture of the negative electrode 1 for a lithium secondary battery

A material having a weight ratio of 70% artificial graphite, 25% natural graphite, 1% SiOx, 0.5% conductive material, 1.0% CMC, 2.0% SBR, and 0.5% additive (PEGDE) was mixed, and then applied to the negative electrode current collector 10 to form a negative electrode active material layer. An electron beam of 0.5 MeV/200 kGy was irradiated onto the negative electrode active material layer 20.

### Comparative Example 3: Manufacture of the negative electrode 1 for a lithium secondary battery

A material having a weight ratio of 70% artificial graphite, 25% natural graphite, 1% SiOx, 0.5% conductive material, 1.0% CMC, 2.0% SBR, and 0.5% additive (PEGDE) was mixed, and then applied to the negative electrode current collector 10 to form a negative electrode active material layer.

In Comparative Example 3, the material applied to the negative electrode current collector 10 was the same as in Example 3, but in Comparative Example 3, the negative electrode active material layer 20 was not irradiated with an electron beam.

### Example 4: Manufacture of the negative electrode 1 for a lithium secondary battery

A material having a weight ratio of 70% artificial graphite, 26% natural graphite, 0% SiOx, 0.5% conductive material, 1.5% CMC, and 2.0% SBR was mixed, and then applied to the negative electrode current collector 10 to form a negative electrode active material layer. An electron beam of 0.5 MeV/200 kGy was irradiated onto the negative electrode active material layer 20.

### Example 5: Manufacture of the negative electrode 1 for a lithium secondary battery

A material having a weight ratio of 70% artificial graphite, 26% natural graphite, 0% SiOx, 0.5% conductive material, 1.5% CMC, and 2.0% SBR was mixed, and then applied to the negative electrode current collector 10 to form a negative electrode active material layer. An electron beam of 0.5 MeV/500 kGy was irradiated onto the negative electrode active material layer 20.

### [Evaluation of Examples and Comparative Examples]

### Water Contact Angle Evaluation

The water contact angle was measured for the surface of the negative electrode 1 for a lithium secondary battery prepared according to the Examples and Comparative Examples by the following method.

A water contact angle measuring device (Mobile Surface Analyzer, KRUSS MSA-S) was used, and 1 µL of water was dropped onto the surface of the negative electrode active material layer according to the Examples and Comparative Examples. Thereafter, the water contact angle was confirmed by applying the Ellipse (Tangent-1) method.

The water contact angle was measured ten times at intervals of 1 second from the time the water solution was dropped onto the surface of the negative electrode active material layer of the Examples and Comparative Examples, and the average value thereof was obtained and used.

### Surface Energy Evaluation

The surface energy was measured for the surface of the negative electrode 1 for a lithium secondary battery prepared according to the Examples and Comparative Examples by the following method.

A surface energy measuring device (Mobile Surface Analyzer, KRUSS MSA-S) was used, and the Owens-Wendt-Rabel & Kaelble Model was employed as the calculation model.

1 µL each of water (Water) and methylene iodide solutions was dropped onto the surface of the negative electrode active material layer according to the Examples and Comparative Examples. The contact angle of water was measured by applying the Ellipse (Tangent-1) method, and the contact angle of methylene iodide was measured by applying the Circle method, and the surface energy of the surface of the negative electrode active material layer was confirmed using these results.

The surface energy was measured ten times at intervals of 1 second from the time when the water or methylene iodide solution was dropped onto the surface of the negative electrode active material layer of the Examples and Comparative Examples, and the average value thereof was obtained and used.

### Electrolyte Impregnation Speed Evaluation

For the negative electrode active material layers according to the Examples and Comparative Examples, samples were prepared by cutting them to have an identical width of 3 cm. The prepared samples were immersed in a tank containing the electrolyte. At this time, the immersion was performed for 15 minutes under a negative pressure condition of -90 kPa, and the lengths of the regions impregnated with the electrolyte were compared for each sample.

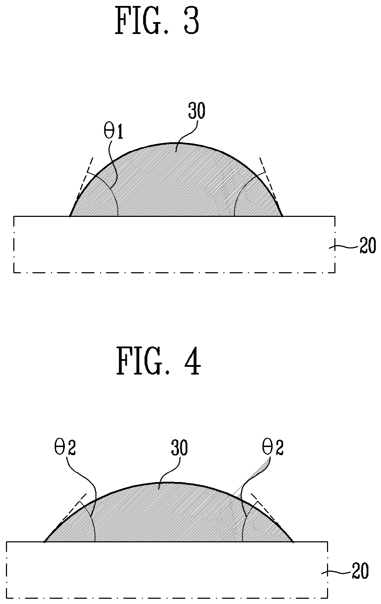

FIG. 3 is a diagram illustrating a water contact angle of a negative electrode active material layer according to Comparative Example 1.

Referring to FIG. 3, the negative electrode 1 for a lithium secondary battery according to Comparative Example 1, which includes the negative electrode active material layer 20 not irradiated with an electron beam, has a water contact angle θ1 of the negative electrode active material layer 20 of 67.9°.

FIG. 4 is a diagram illustrating a water contact angle of a negative electrode active material layer according to Example 1.

Meanwhile, referring to FIG. 4, Example 1, in which the same material as in Comparative Example 1 was applied to the negative electrode current collector 10 to form the negative electrode active material layer 20, has a water contact angle θ2 of the negative electrode active material layer 20 of 53.6° due to the irradiation of the negative electrode active material layer 20 with an electron beam.

That is, it can be seen that when the negative electrode active material layer 20 is irradiated with an electron beam, the water contact angle of the negative electrode active material layer 20 decreases.

Table 1 below shows the water contact angle and surface energy of the negative electrode active material layer 20 of the negative electrode 1 for a lithium secondary battery manufactured according to the Examples and Comparative Examples.

**[Table 1]**

| | Artificia I graphit e | Natural graphit e | SiOx | Conduct ive material (carbon black) | CMC | SBR | Additiv e | Electro n beam (Mev/k Gy) | Contact angle (°) | Surface energy (mN/m) |
|---|---|---|---|---|---|---|---|---|---|---|
| Exampl e 1 | 70.0 | 26.0 | 0.0 | 0.5 | 1.5 | 2.0 | 0.0 | 0.5/200 | 53.6 | 62.3 |
| Exampl e 2 | 70.0 | 25.0 | 1.0 | 0.5 | 1.5 | 2.0 | 0.0 | 0.5/200 | 53.1 | 64.1 |
| Exampl e 3 | 70.0 | 26.0 | 0.0 | 0.5 | 1.0 | 2.0 | 0.5 (PEGD E) | 0.5/200 | 40.1 | 68.0 |
| Exampl e 4 | 70.0 | 26.0 | 0.0 | 0.5 | 1.5 | 2.0 | 0.0 | 0.5/100 | 58.4 | 61.1 |
| Exampl e 5 | 70.0 | 26.0 | 0.0 | 0.5 | 1.5 | 2.0 | 0.0 | 0.5/500 | 51.2 | 63.8 |
| Compa rative Exampl e 1 | 70.0 | 26.0 | 0.0 | 0.5 | 1.5 | 2.0 | 0.0 | 0/0 | 79.8 | 51.5 |
| Compa rative Exampl e 2 | 70.0 | 25.0 | 1.0 | 0.5 | 1.5 | 2.0 | 0.0 | 0/0 | 77.6 | 49.4 |
| Compa rative Exampl e 3 | 70.0 | 26.0 | 0.0 | 0.5 | 1.0 | 2.0 | 0.5 (PEGD E) | 0/0 | 75.1 | 47.2 |

As shown in Table 1, the negative electrode 1 for a lithium secondary battery manufactured according to Example 1 had a decreased water contact angle and an increased surface energy of the negative electrode active material layer 20 compared with the negative electrode 1 for a lithium secondary battery manufactured according to Comparative Example 1. The negative electrode 1 for a lithium secondary battery manufactured according to Example 2 had a decreased water contact angle and an increased surface energy of the negative electrode active material layer 20 compared with the negative electrode 1 for a lithium secondary battery manufactured according to Comparative Example 2. The negative electrode 1 for a lithium secondary battery manufactured according to Example 3 had a decreased water contact angle and an increased surface energy of the negative electrode active material layer 20 compared with the negative electrode 1 for a lithium secondary battery manufactured according to Comparative Example 3.

That is, in the case where the same composition was applied to the negative electrode current collector 10 to form the negative electrode active material layer 20, it can be seen that the water contact angle of the negative electrode active material layer 20 decreased and the surface energy increased as the electron beam was irradiated.

In addition, as shown in Table 1, the negative electrode 1 for a lithium secondary battery manufactured according to Example 4 had an increased water contact angle and a decreased surface energy of the negative electrode active material layer 20 compared with the negative electrode 1 for a lithium secondary battery manufactured according to Example 1, but had a decreased water contact angle and an increased surface energy of the negative electrode active material layer 20 compared with the negative electrode 1 for a lithium secondary battery manufactured according to Comparative Example 1.

That is, in the case where the same composition was applied to the negative electrode current collector 10 to form the negative electrode active material layer 20, it can be seen that when the dose of the electron beam irradiated onto the negative electrode active material layer 20 decreases, the amount of decrease in the water contact angle of the negative electrode active material layer 20 becomes smaller and the amount of increase in the surface energy becomes smaller.

In addition, as shown in Table 1, the negative electrode 1 for a lithium secondary battery manufactured according to Example 5 exhibited a greater decrease in the water contact angle of the negative electrode active material layer 20 and a greater increase in the surface energy compared with the negative electrode 1 for a lithium secondary battery manufactured according to Example 1.

That is, in the case where the same composition was applied to the negative electrode current collector 10 to form the negative electrode active material layer 20, it can be seen that when the dose of the electron beam irradiated onto the negative electrode active material layer 20 increases, the amount of decrease in the water contact angle of the negative electrode active material layer 20 becomes greater and the amount of increase in the surface energy becomes greater.

Therefore, it can be seen that when the electron beam is irradiated onto the negative electrode active material layer 20, the water contact angle of the negative electrode active material layer 20 decreases and the surface energy increases, and the greater the dose of the electron beam irradiated onto the negative electrode active material layer 20, the greater the decrease in the water contact angle and the greater the increase in the surface energy.

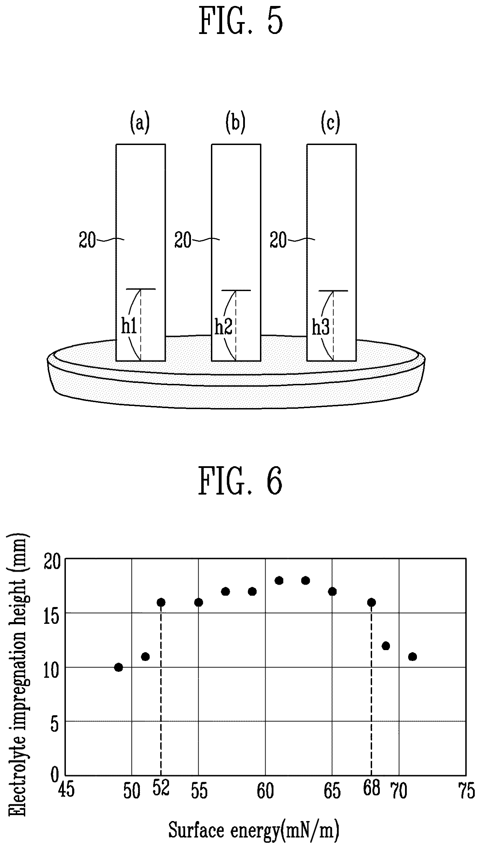

FIG. 5 is a diagram illustrating a length of electrolyte impregnated into the negative electrode active material layer per unit time according to Comparative Example and Example.

Referring to FIG. 5, (a) of FIG. 5 shows a depth h1 at which an electrolyte is impregnated into the negative electrode 1 for a lithium secondary battery manufactured according to Example 1, (b) of FIG. 5 shows a depth h2 at which an electrolyte is impregnated into the negative electrode 1 for a lithium secondary battery manufactured according to Example 4, and (c) of FIG. 5 shows a depth h3 at which an electrolyte is impregnated into the negative electrode 1 for a lithium secondary battery manufactured according to Comparative Example 1.

At this time, h1 is longer than h2 and h3, and h2 is longer than h3.

Specifically, h1 is 1.5 cm, h2 is 1.4 cm, and h3 is 1.1 cm.

That is, the negative electrode 1 for a lithium secondary battery manufactured according to Example 1 and Example 4, in which the negative electrode active material layer 20 was irradiated with an electron beam, had a greater length of electrolyte impregnated per unit time compared with the negative electrode 1 for a lithium secondary battery manufactured according to Comparative Example 1, in which the negative electrode active material layer 20 was not irradiated with an electron beam.

Therefore, it can be seen that when the negative electrode 1 for a lithium secondary battery is irradiated with an electron beam so that the water contact angle of the negative electrode active material layer 20 decreases and the surface energy increases, the electrolyte can be impregnated into the negative electrode 1 for a lithium secondary battery at a faster speed.

Meanwhile, when the negative electrode 1 for a lithium secondary battery is formed such that the surface energy of the negative electrode active material layer 20 is within a predetermined range, and both the surface energy and the water contact angle are within predetermined ranges, the impregnation speed of the electrolyte can be effectively improved.

FIG. 6 is a graph illustrating a relationship between a surface energy of the negative electrode active material layer and a speed at which an electrolyte is impregnated into the negative electrode for a lithium secondary battery.

As shown in FIG. 6, it can be seen that when the surface energy of the negative electrode active material layer 20 is 52 mN/m or more and 68 mN/m or less, the speed at which the electrolyte is impregnated into the negative electrode 1 for a lithium secondary battery is significantly improved.

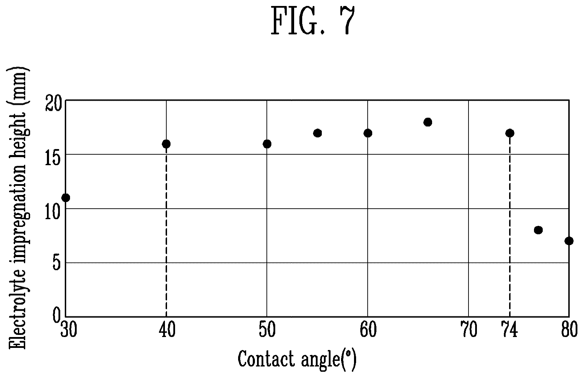

FIG. 7 is a graph illustrating a relationship between a water contact angle of the negative electrode active material layer having a surface energy of 52 mN/m or more and 68 mN/m or less and a speed at which an electrolyte is impregnated into the negative electrode for a lithium secondary battery.

And, as shown in FIG. 7, it can be seen that when the water contact angle of the negative electrode active material layer 20 having a surface energy of 52 mN/m or more and 68 mN/m or less is 40° or more and 74° or less, the speed at which the electrolyte is impregnated into the negative electrode 1 for a lithium secondary battery is significantly improved.

As such, the negative electrode for a lithium secondary battery according to the present disclosure provides an effect in that the speed at which the electrolyte is impregnated is improved, so that a lithium secondary battery including the negative electrode for a lithium secondary battery can be rapidly charged.

In addition, the method of manufacturing a negative electrode for a lithium secondary battery according to the present disclosure provides an effect in that a negative electrode for a lithium secondary battery, in which the speed at which the electrolyte is impregnated is improved so that the lithium secondary battery can be rapidly charged, can be manufactured.

It is understood by those skilled in the art that the plurality of exemplary embodiments described above are specific examples of the following aspects.

Aspect 1. A negative electrode for a lithium secondary battery, included in the lithium secondary battery, wherein a surface of the negative electrode for the lithium secondary battery has a surface energy of 52 mN/m or more and 68 mN/m or less.

Aspect 2. The negative electrode for the lithium secondary battery according to aspect 1, wherein a surface of the negative electrode for the lithium secondary battery has a water contact angle of 40° or more and 74° or less.

Aspect 3. The negative electrode for the lithium secondary battery according to aspect 1 or 2, wherein the negative electrode for the lithium secondary battery comprises: a negative electrode current collector; and a negative electrode active material layer formed by applying a negative electrode active material to the negative electrode current collector.

Aspect 4. The negative electrode for the lithium secondary battery according to aspect 3, wherein the surface of the negative electrode for the lithium secondary battery is a surface of the negative electrode active material layer.

Aspect 5. The negative electrode for the lithium secondary battery according to aspect 4, wherein a surface of the negative electrode active material layer is irradiated with an electron beam such that the surface has a surface energy of 52 mN/m or more and 68 mN/m or less and a water contact angle of 40° or more and 74° or less.

Aspect 6. The negative electrode for the lithium secondary battery according to any one of aspects 3 to 5, wherein the negative electrode active material layer further comprises a binder and a conductive material.

Aspect 7. The negative electrode for the lithium secondary battery according to aspect 6, wherein, when the electron beam is irradiated, the binder is decomposed such that at least one of a surface energy and a water contact angle of the surface of the negative electrode active material layer changes.

Aspect 8. A method of manufacturing a negative electrode for a lithium secondary battery, comprising: a preparation step of preparing a negative electrode current collector; a coating step of forming a negative electrode active material layer by applying a negative electrode active material to the negative electrode current collector; and an irradiation step of irradiating the negative electrode active material layer with an electron beam.

Aspect 9. The method of manufacturing a negative electrode for a lithium secondary battery according to aspect 8, wherein a surface of the negative electrode active material layer has a surface energy of 52 mN/m or more and 68 mN/m or less.

Aspect 10. The method of manufacturing a negative electrode for a lithium secondary battery according to aspect 8 or 9, wherein a surface of the negative electrode active material layer has a water contact angle of 40° or more and 74° or less.

Aspect 11. The method of manufacturing a negative electrode for a lithium secondary battery according to any one of aspects 8 to 10, wherein the negative electrode active material layer further comprises a binder and a conductive material.

Aspect 12. The method of manufacturing a negative electrode for a lithium secondary battery according to aspect 11, wherein, when the electron beam is irradiated, the binder is decomposed such that a surface energy and a water contact angle of a surface of the negative electrode active material layer change.

The above description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being included in the scope of the present disclosure.

## Claims

1. A negative electrode for a lithium secondary battery, included in the lithium secondary battery, wherein a surface of the negative electrode for the lithium secondary battery has a surface energy of 52 mN/m or more and 68 mN/m or less.

2. The negative electrode for the lithium secondary battery according to claim 1, wherein a surface of the negative electrode for the lithium secondary battery has a water contact angle of 40° or more and 74° or less.

3. The negative electrode for the lithium secondary battery according to claim 1 or 2, wherein the negative electrode for the lithium secondary battery comprises:
a negative electrode current collector; and
a negative electrode active material layer formed by applying a negative electrode active material to the negative electrode current collector.

4. The negative electrode for the lithium secondary battery according to claim 3, wherein the surface of the negative electrode for the lithium secondary battery is a surface of the negative electrode active material layer.

5. The negative electrode for the lithium secondary battery according to claim 4, wherein a surface of the negative electrode active material layer is irradiated with an electron beam such that the surface has a surface energy of 52 mN/m or more and 68 mN/m or less and a water contact angle of 40° or more and 74° or less.

6. The negative electrode for the lithium secondary battery according to any one of claims 3 to 5, wherein the negative electrode active material layer further comprises a binder and a conductive material.

7. The negative electrode for the lithium secondary battery according to claim 6, wherein, when the electron beam is irradiated, the binder is decomposed such that at least one of a surface energy and a water contact angle of the surface of the negative electrode active material layer changes.

8. A method of manufacturing a negative electrode for a lithium secondary battery, comprising:
a preparation step of preparing a negative electrode current collector;
a coating step of forming a negative electrode active material layer by applying a negative electrode active material to the negative electrode current collector; and
an irradiation step of irradiating the negative electrode active material layer with an electron beam.

9. The method of manufacturing a negative electrode for a lithium secondary battery according to claim 8, wherein a surface of the negative electrode active material layer has a surface energy of 52 mN/m or more and 68 mN/m or less.

10. The method of manufacturing a negative electrode for a lithium secondary battery according to claim 8 or 9, wherein a surface of the negative electrode active material layer has a water contact angle of 40° or more and 74° or less.

11. The method of manufacturing a negative electrode for a lithium secondary battery according to any one of claims 8 to 10, wherein the negative electrode active material layer further comprises a binder and a conductive material.

12. The method of manufacturing a negative electrode for a lithium secondary battery according to claim 11, wherein, when the electron beam is irradiated, the binder is decomposed such that a surface energy and a water contact angle of a surface of the negative electrode active material layer change.
